# EUROPEAN PATENT APPLICATION

(11) **EP 4 307 404 A1**
(43) Date of publication of application: **17.01.2024**
(21) Application number: 22766854.8
(22) Date of filing: 25.02.2022
(51) Int. Cl.: H01M 4/13, H01M 4/133, H01M 4/134, H01M 4/36, H01M 4/38, H01M 4/587

(54) **NONAQUEOUS ELECTROLYTE SECONDARY BATTERY**

(30) Priority: 08.03.2021 JP 2021036453
(71) Applicant: Panasonic Energy Co., Ltd., Osaka 570-8511 (JP)
(72) Inventor: OHTA, Atsushi, Kadoma-shi, Osaka 571-0057 (JP)
(74) Representative: Novagraaf International SA
(86) International application number: PCT/JP2022/007816
(87) International publication number: WO 2022/190895

(57) **Abstract**

The present invention provides a nonaqueous electrolyte secondary battery which is suppressed in the occurrence of an internal short circuit at the outer winding end of an electrode body. A nonaqueous electrolyte secondary battery according to one embodiment of the present disclosure comprises: an electrode body which is obtained by winding a positive electrode and a negative electrode, with a separator being interposed therebetween; a nonaqueous electrolyte; and an outer case for housing the electrode body and the nonaqueous electrolyte. The negative electrode comprises a first negative electrode active material and a second negative electrode active material that has a greater expansion coefficient than the first negative electrode active material during charging; and if the proportion of the mass of the second negative electrode active material with respect to the total mass of the first negative electrode active material and the second negative electrode active material is defined as the second negative electrode active material ratio, the second negative electrode active material ratio at the outer winding end is smaller than the second negative electrode active material ratio at the inner winding end.

## Description

### TECHNICAL FIELD

The present disclosure relates to a non-aqueous electrolyte secondary battery.

### BACKGROUND

Conventionally, there has been a widespread use of non-aqueous electrolyte secondary batteries formed by housing, in an outer casing, a spiral-type electrode assembly obtained by winding a strip-shaped positive electrode and a strip-shaped negative electrode with an interposed separator. In recent years, from the perspective of achieving a higher battery capacity, studies are being conducted for using, as a negative electrode active material included in a negative electrode mixture layer, a Si-based material containing silicon (Si) which can occlude more lithium ions per unit mass than can a carbon-based material such as graphite. Patent Literature 1 discloses a negative electrode having a mixture layer containing a Si-based material at a predetermined ratio.

Patent Literature 2 discloses a non-aqueous electrolyte secondary battery in which a spiral-type electrode assembly is vertically sandwiched between insulation plates and received in a space below (toward a bottom portion from) a grooved portion of an outer casing. Further, Patent Literature 2 discloses a negative electrode which contains two types of Si-based materials, and in which, in two separate layers in the thickness direction of a negative electrode mixture layer, mixing ratios of the two types of Si-based materials are different from each other.

### CITATION LIST

### PATENT LITERATURE

PATENT LITERATURE 1: Japanese Unexamined Patent Application Publication No. 2010-212228
PATENT LITERATURE 2: Japanese Unexamined Patent Application Publication No. 2020-149821

### SUMMARY

### TECHNICAL PROBLEM

At an outer winding end portion of the electrode assembly of the non-aqueous electrolyte secondary battery disclosed in Patent Literature 2, when the negative electrode expands due to charging, the negative electrode located below the grooved portion cannot push up the insulation plate to above the grooved portion and may become bent, thereby possibly breaking an adjacent separator and causing a micro-short circuit. In particular, as compared to a carbon-based material, a Si-based material undergoes a larger volume change due to absorption of lithium ions, so that a negative electrode containing a Si-based material has a higher risk of occurrence of micro-short circuit. In Patent Literature 1 to 3, consideration has not been made regarding suppression of occurrence of internal short circuit at the outer winding end portion of the electrode assembly, and there is still room for further studies.

An object of the present disclosure is to provide a non-aqueous electrolyte secondary battery in which occurrence of internal short circuit at the outer winding end portion is suppressed.

### SOLUTION TO PROBLEM

A non-aqueous electrolyte secondary battery according to one aspect of the present disclosure includes: an electrode assembly obtained by winding a positive electrode and a negative electrode with an interposed separator; a non-aqueous electrolyte; and an outer casing that houses the electrode assembly and the non-aqueous electrolyte. The negative electrode contains a first negative electrode active material and a second negative electrode active material having a coefficient of expansion during charging that is higher than that of the first negative electrode active material. Assuming that a ratio of the mass of the second negative electrode active material relative to the total mass of the first negative electrode active material and the second negative electrode active material is defined as a second negative electrode active material ratio, a second negative electrode active material ratio at an outer winding end portion is lower than a second negative electrode active material ratio at an inner winding end portion.

### ADVANTAGEOUS EFFECTS OF INVENTION

According to a non-aqueous electrolyte secondary battery according to the present disclosure, it is possible to suppress occurrence of internal short circuit at the outer winding end portion of the electrode assembly and improve reliability of the battery.

### BRIEF DESCRIPTION OF DRAWINGS

[FIG. 1] FIG. 1 is an axial cross-sectional view of a secondary battery according to an example embodiment in an initial state.
[FIG. 2] FIG. 2 is an enlarged cross-sectional view of a part near a grooved portion of the secondary battery according to the example embodiment after repeated charging and discharging.
[FIG. 3] FIG. 3 is a perspective view of an electrode assembly in the example embodiment.
[FIG. 4] FIG. 4 is a front view showing, in an unwound state, a positive electrode and a negative electrode constituting the electrode assembly in the example embodiment.
[FIG. 5] (a)-(d) are diagrams showing changes in second negative electrode active material ratios in the longitudinal direction in FIG. 4.
[FIG. 6] FIG. 6 is a diagram showing a view corresponding to FIG. 2 of a secondary battery according to conventional art.

### DESCRIPTION OF EMBODIMENTS

An example embodiment of a cylindrical secondary battery according to the present disclosure will be described in detail below by reference to the drawings. In the following description, specific shapes, materials, numerical values, directions, and the like are given as examples for facilitating understanding of the present invention, and may be changed as appropriate in accordance with specifications of the cylindrical secondary battery. Further, when the following description refers to a plurality of embodiments or variants, it is envisioned from the beginning that characteristic features thereof may be used in combination as appropriate.

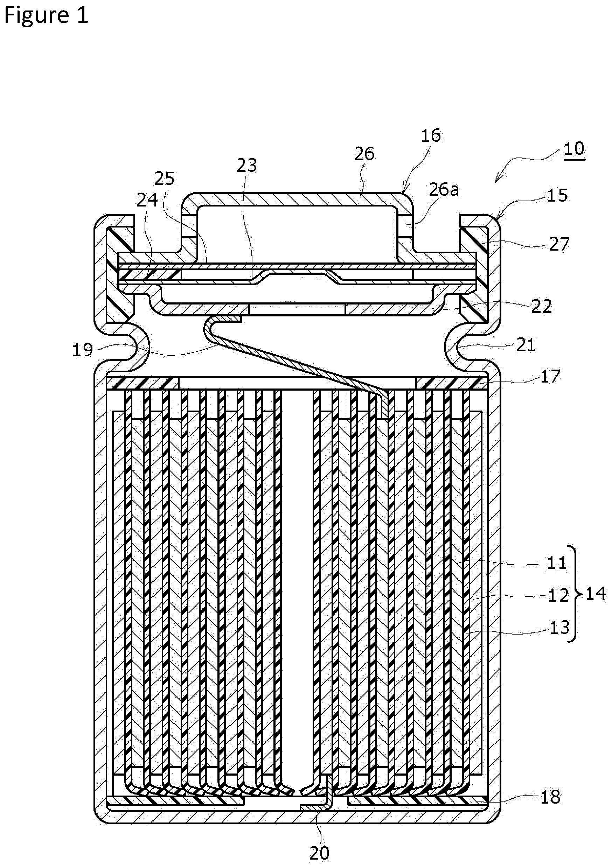

FIG. 1 is an axial cross-sectional view of a cylindrical secondary battery 10 according to an example embodiment in an initial state. Here, the initial state means a state before charging is performed for the first time. In the secondary battery 10 shown in FIG. 1, an electrode assembly 14 and a non-aqueous electrolyte (not shown in drawing) are housed in an outer casing 15. The electrode assembly 14 has a spiral structure formed by winding a strip-shaped positive electrode 11 and a strip-shaped negative electrode 12 with an interposed separator 13. As a non-aqueous solvent (organic solvent) of the electrolyte solution, it is possible to use carbonates, lactones, ethers, ketones, esters, and the like, and these solvents can be used by mixing two or more types thereof. When two or more types of solvents are to be used in combination, it is preferable to use a mixed solvent containing a cyclic carbonate and a chain carbonate. For example, ethylene carbonate (EC), propylene carbonate (PC), butylene carbonate (BC), and the like can be used as the cyclic carbonate, and dimethyl carbonate (DMC), ethyl methyl carbonate (EMC), diethyl carbonate (DEC), and the like can be used as the chain carbonate. As an electrolyte salt of the electrolyte solution, it is possible to use LiPF₆, LiBF₄, LiCF₃SO₃, and the like, as well as mixtures thereof. The amount of the electrolyte salt dissolved in the non-aqueous solvent can be, for example, 0.5 to 2.0 mol/L. In the following, for convenience of explanation, a side toward a sealing assembly 16 will be described as "upper", and a side toward the bottom portion of the outer casing 15 will be described as "lower".

The upper end portion of the outer casing 15 is closed with the sealing assembly 16, and the interior of the secondary battery 10 is thereby hermetically sealed. Above and below the electrode assembly 14, insulation plates 17 and 18 are provided respectively. A positive electrode lead 19 extends upward through a through hole in the insulation plate 17, and is welded to the lower surface of a filter 22, which is the bottom plate of the sealing assembly 16. In the secondary battery 10, a cap 26, which is the top plate of the sealing assembly 16 electrically connected to the filter 22, serves as the positive electrode terminal. Meanwhile, a negative electrode lead 20 extends toward the bottom portion of the outer casing 15 through a through hole in the insulation plate 18, and is welded to the inner surface of the bottom portion of the outer casing 15. In the secondary battery 10, the outer casing 15 serves as the negative electrode terminal. In cases where the negative electrode lead 20 is provided at an outer winding end portion, the negative electrode lead 20 extends on the outside of the insulation plate 18 and toward the bottom portion of the outer casing 15, and is welded to the inner surface of the bottom portion of the outer casing 15.

The outer casing 15 is, for example, a bottomed cylindrical metal outer can. A gasket 27 is provided between the outer casing 15 and the sealing assembly 16 to ensure airtightness inside the secondary battery 10. The outer casing 15 has a grooved portion 21 which is formed by, for example, pressing a side surface portion from the outside, and which supports the sealing assembly 16. The grooved portion 21 is preferably formed in an annular shape along the circumferential direction of the outer casing 15, and supports the sealing assembly 16 on its upper face.

The sealing assembly 16 comprises the filter 22, a lower valve member 23, an insulation member 24, an upper valve member 25, and the cap 26, which are laminated in this order from the electrode assembly 14 side. Each of the members constituting the sealing assembly 16 has, for example, a disk shape or a ring shape, and the respective members except the insulation member 24 are electrically connected to each other. The lower valve member 23 and the upper valve member 25 are connected to each other at their central portions, and the insulation member 24 is interposed between peripheral edge portions of these valve members. When the internal pressure of the battery increases due to abnormal heat generation, for example, the lower valve member 23 ruptures, which causes the upper valve member 25 to swell toward the cap 26 and move away from the lower valve member 23, and the electrical connection between the two valve members is thereby cut off. When the internal pressure increases further, the upper valve member 25 ruptures, and gas is discharged from an opening 26a in the cap 26.

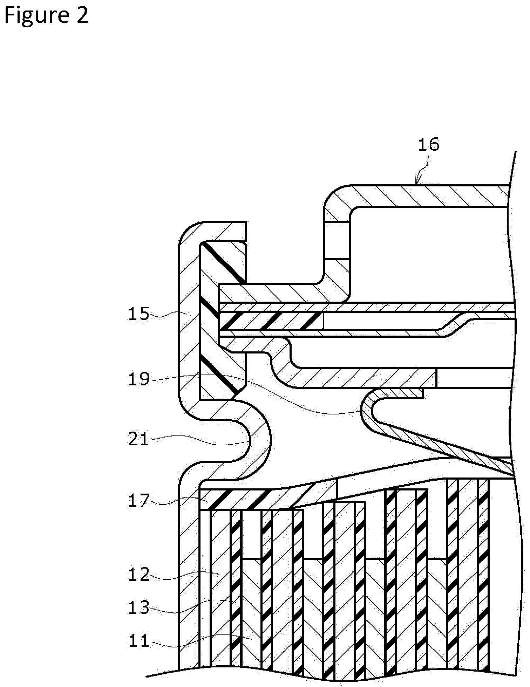

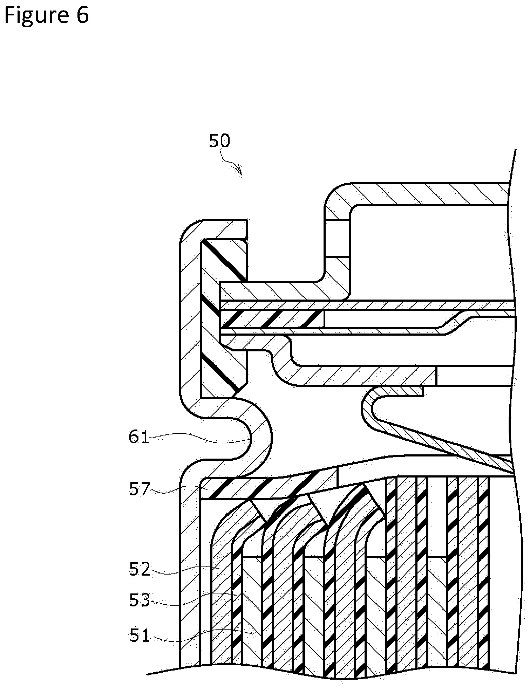

Next, differences between the secondary battery 10 according to the example embodiment and a conventional secondary battery 50 will be described by reference to FIGS. 2 and 6. FIG. 2 is an enlarged cross-sectional view of a part near the grooved portion 21 of the secondary battery 10 according to the example embodiment after repeated charging and discharging. Further, FIG. 6 is a diagram showing a view corresponding to FIG. 2 of the secondary battery 50 according to conventional art.

In the secondary battery 50 according to conventional art of FIG. 6, the negative electrode 52 has expanded due to repeated charging and discharging. At an inner winding end portion, the negative electrode 52 is pushing the insulation plate 57 upward. However, at an outer winding end portion, since the grooved portion 61 is located above the insulation plate 57, the negative electrode 52 on the outer winding end side can only push the insulation plate 57 up to the grooved portion 61, and the tip part of the negative electrode 52 is bent. The bent portion of the tip part of the negative electrode 52 may press against the adjacent separator and cause micro-short circuit.

In the secondary battery 10 according to the example embodiment of FIG. 2, as in the secondary battery 50 according to conventional art shown in FIG. 6, the negative electrode 12 has similarly expanded due to repeated charging and discharging. However, as will be described later, by adjusting the ratio of negative electrode active materials contained in the negative electrode 12, the coefficient of expansion of the negative electrode 12 at the outer winding end portion is made lower than the coefficient of expansion of the negative electrode 12 at the inner winding end portion, and bending of the tip part of the negative electrode 12 at the outer winding end portion is thereby suppressed. As a result, it is possible to suppress occurrence of internal short circuit at the outer winding end portion and improve reliability of the secondary battery 10.

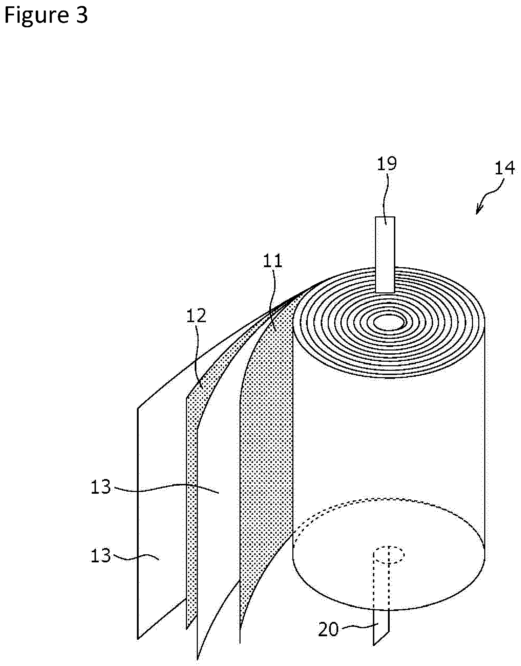

Next, the electrode assembly 14 will be described by reference to FIG. 3. FIG. 3 is a perspective view of the electrode assembly 14. As described above, the electrode assembly 14 has a spiral structure formed by spirally winding the positive electrode 11 and the negative electrode 12 with the interposed separator 13. The positive electrode 11, the negative electrode 12, and the separator 13 are all formed in a strip shape, and spirally wound around a winding core arranged along a winding axis so as to be placed in a state of being alternately laminated in the radial direction of the electrode assembly 14. In the radial direction, a side toward the winding axis is referred to as the inner periphery side, and the opposite side is referred to as the outer periphery side. In the electrode assembly 14, the longitudinal direction of the positive electrode 11 and the negative electrode 12 is the winding direction, and the width direction of the positive electrode 11 and the negative electrode 12 is the axial direction. At the upper end of the electrode assembly 14, the positive electrode lead 19 extends axially from a position located substantially at the midpoint in the radial direction between the center and the outermost periphery. Further, at the lower end of the electrode assembly 14, the negative electrode lead 20 extends axially from a position near the winding axis.

As the separator 13, a porous sheet having ion permeability and insulation property is used. Specific examples of the porous sheet include a microporous thin film, woven fabric, and non-woven fabric. As the material of the separator 13, olefin resins such as polyethylene and polypropylene are preferred. The thickness of the separator 13 is, for example, 10 µm to 50 µm. In accordance with increasing battery capacity and output, increasingly thin separators 13 tend to be used. The separator 13 has a melting point of, for example, about 130 °C to 180 °C.

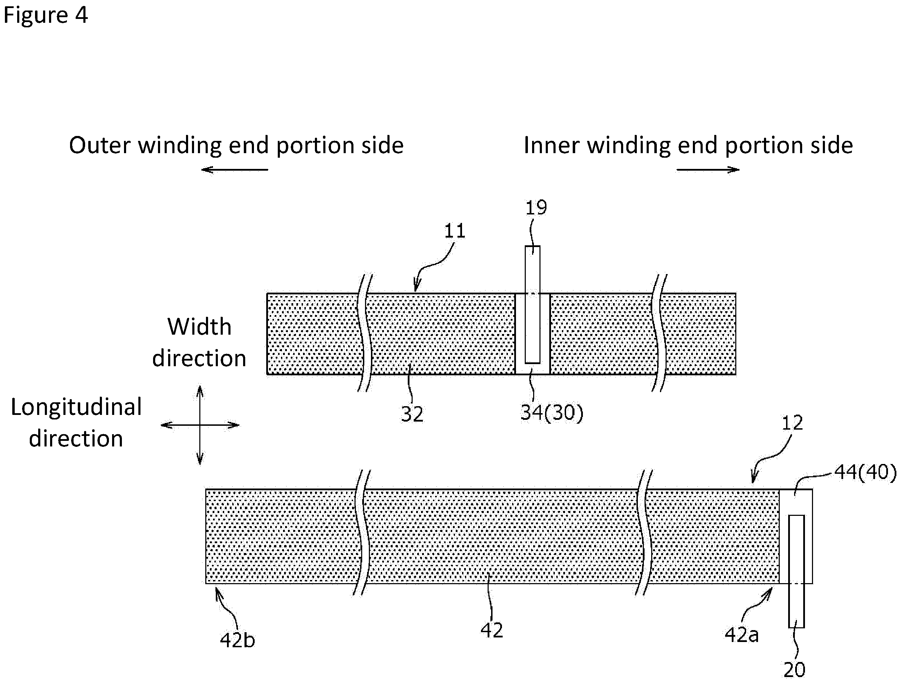

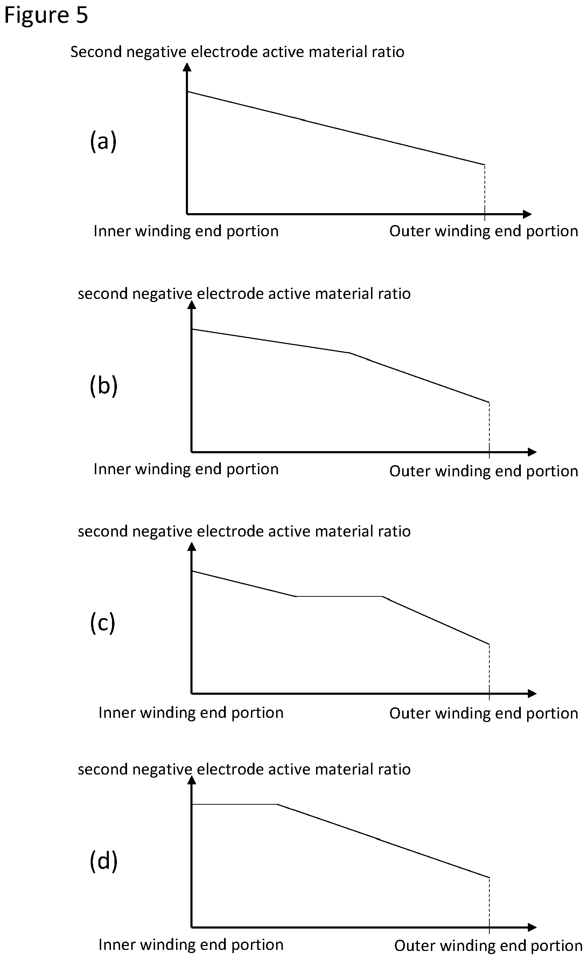

Next, the positive electrode 11 and the negative electrode 12 according to the present embodiment will be described by reference to FIGS. 4 and 5. FIG. 4 is a front view of the positive electrode 11 and the negative electrode 12 constituting the electrode assembly 14. In FIG. 4, the positive electrode 11 and the negative electrode 12 are shown in an unwound state. As shown for example in FIG. 4, in the electrode assembly 14, the negative electrode 12 is formed larger than the positive electrode 11 in order to prevent deposition of lithium on the negative electrode 12. More specifically, the length of the negative electrode 12 in the direction (axial direction) is greater than the length of the positive electrode 11 in the width direction. Further, the longitudinal length of the negative electrode 12 is greater than the longitudinal length of the positive electrode 11.
According to this feature, when the electrode assembly 14 is wound, at least the positive electrode mixture layer 32 of the positive electrode 11 is arranged facing the negative electrode mixture layer 42 of the negative electrode 12 across the separator 13.

The positive electrode 11 comprises a strip-shaped positive electrode current collector 30 and a positive electrode mixture layer 32 formed on a surface of the positive electrode current collector 30. The positive electrode mixture layer 32 is formed on at least one of the inner periphery side and the outer periphery side of the positive electrode current collector 30, and is preferably formed over the entire area of both surfaces of the positive electrode current collector 30 excluding a positive electrode exposed portion 34 described later. As the positive electrode current collector 30, for example, a foil of a metal such as aluminum, a film having such a metal disposed on its surface layer, or the like is used. The thickness of the positive electrode current collector 30 is, for example, 10 µm to 30 µm.

The positive electrode mixture layer 32 preferably contains a positive electrode active material, a conductive agent, and a binder. The positive electrode mixture layer 32 can be produced, for example, by applying a positive electrode mixture slurry containing the positive electrode active material, the conductive agent, the binder, and a solvent such as N-methyl-2-pyrrolidone (NMP) onto both sides of the positive electrode current collector 30, drying the applied slurry, and then rolling the product.

On the positive electrode 11, there is provided a positive electrode exposed portion 34 where a surface of the positive electrode current collector 30 is exposed. The positive electrode exposed portion 34 is a portion to which the positive electrode lead 19 is connected, and is where a surface of the positive electrode current collector 30 is not covered with the positive electrode mixture layer 32. The positive electrode exposed portion 34 is formed wider than the positive electrode lead 19 in the longitudinal direction. The positive electrode exposed portion 34 is preferably provided on both surfaces of the positive electrode 11 at positions overlapping each other in the thickness direction of the positive electrode 11. The positive electrode lead 19 is joined to the positive electrode exposed portion 34 by, for example, ultrasonic welding.

In the example shown in FIG. 4, the positive electrode exposed portion 34 is provided at a central part, in the longitudinal direction, of the positive electrode 11 over the entire length in the width direction. Although the positive electrode exposed portion 34 may be formed at the inner winding end portion or the outer winding end portion of the positive electrode 11, in consideration of current collection property, the positive electrode exposed portion 34 is preferably provided at a position substantially equidistant from the inner winding end portion and the outer winding end portion. By connecting the positive electrode lead 19 to the positive electrode exposed portion 34 provided at such a position, when the electrode assembly 14 is wound, the positive electrode lead 19 is arranged substantially at the midpoint, in the radial direction, of the electrode assembly 14 in a manner protruding upward from an end face, in the width direction, of the electrode assembly 14. The positive electrode exposed portion 34 is formed, for example, by intermittent application of the positive electrode mixture slurry, according to which the slurry is not applied to a part of the positive electrode current collector 30.

Examples of the positive electrode active material contained in the positive electrode mixture layer 32 include lithium transition metal oxides containing transition metal elements such as Co, Mn, and Ni. The lithium transition metal oxides are, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3). A single type among these may be used alone, or a plurality of types may be mixed and used. In terms of enabling an increase in capacity of the non-aqueous electrolyte secondary battery, the positive electrode active material preferably contains a lithium nickel composite oxide such as LiₓNiO₂, LiₓCo_{y}Ni_{1-y}O₂, and LiₓNi_{1-y}M_{y}O_{z}, (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3).

Examples of the conductive agent contained in the positive electrode mixture layer 32 include carbon-based particles such as carbon black (CB), acetylene black (AB), Ketjen black, carbon nanotubes (CNTs), graphene, and graphite. These may be used alone or by combining two or more thereof.

Examples of the binder contained in the positive electrode mixture layer 32 include fluororesins such as polytetrafluoroethylene (PTFE) and polyvinylidene fluoride (PVdF), polyacrylonitrile (PAN), polyimide resins, acrylic resins, and polyolefin resins. A single type among these may be used alone, or two or more types may be used in combination. These may be used alone or by combining two or more thereof. In cases where the positive electrode mixture slurry is prepared using an aqueous solvent, it is possible to use styrene-butadiene rubber (SBR), nitrile rubber (NBR), CMC or a salt thereof, polyacrylic acid (PAA) or a salt thereof, polyvinyl alcohol, or the like.

The negative electrode 12 comprises a strip-shaped negative electrode current collector 40 and a negative electrode mixture layer 42 formed on a surface of the negative electrode current collector 40. The negative electrode mixture layer 42 is formed on at least one of the inner periphery side and the outer periphery side of the negative electrode current collector 40, and is preferably formed over the entire area of both surfaces of the negative electrode current collector 40 excluding a negative electrode exposed portion 44 described later. As the negative electrode current collector 40, for example, a foil of a metal such as copper, a film having such a metal disposed on its surface layer, or the like is used. The thickness of the negative electrode current collector 40 is, for example, 5 µm to 30 µm.

The negative electrode mixture layer 42 contains, for example, negative electrode active materials such as a first negative electrode active material and a second negative electrode active material, and a binder. The negative electrode mixture layer 42 can be produced, for example, by applying a negative electrode mixture slurry containing the negative electrode active materials, the binder, and a solvent such as water onto both sides of the negative electrode current collector 40, drying the applied slurry, and then rolling the product.

In the example shown in FIG. 4, a negative electrode exposed portion 44 is provided at the inner winding end portion, in the longitudinal direction, of the negative electrode 12 over the entire length in the width direction of the current collector. The negative electrode exposed portion 44 is a portion to which the negative electrode lead 20 is connected, and is where a surface of the negative electrode current collector 40 is not covered with the negative electrode mixture layer 42. The negative electrode exposed portion 44 is formed wider than the negative electrode lead 20 in the longitudinal direction. The negative electrode exposed portion 44 is preferably provided on both surfaces of the negative electrode 12 at positions overlapping each other in the thickness direction of the negative electrode 12.

In FIG. 4, an inner winding end portion 42a of the negative electrode mixture layer 42 is a part adjacent to the negative electrode exposed portion 44. On the other hand, an outer winding end portion 42b of the negative electrode mixture layer 42 is the same as the outer winding end portion of the negative electrode 12. The negative electrode mixture layer 42 extends continuously from the inner winding end portion 42a to the outer winding end portion 42b.

In the present embodiment, the negative electrode lead 20 is joined to a surface, on the inner periphery side, of the negative electrode current collector 40 by, for example, ultrasonic welding. One end portion of the negative electrode lead 20 is arranged on the negative electrode exposed portion 44, and the other end portion extends downward from the lower end of the negative electrode exposed portion 44.

The position at which the negative electrode lead 20 is arranged is not limited to the example shown in FIG. 4, and the negative electrode lead 20 may be provided only at the outer winding end portion of the negative electrode 12. Alternatively, the negative electrode lead 20 may be provided at the inner winding end portion and the outer winding end portion of the negative electrode 12. In that case, the current collection property is improved. By configuring such that a negative electrode exposed portion 44 located at the outer winding end portion of the negative electrode 12 is placed in contact with the inner periphery surface of the outer casing 15 (see FIG. 1), it is further possible to electrically connect the outer winding end portion of the negative electrode 12 to the outer casing 15 without using the negative electrode lead 20 at the outer winding end portion. The negative electrode exposed portion 44 is formed, for example, by intermittent application of the negative electrode mixture slurry, according to which the slurry is not applied to a part of the negative electrode current collector 40.

The negative electrode mixture layer 42 contains a first negative electrode active material and a second negative electrode active material having a coefficient of expansion during charging that is higher than that of the first negative electrode active material. The first negative electrode active material is, for example, a carbon-based material such as natural graphite or artificial graphite. The second negative electrode active material is, for example, a metal that forms an alloy with lithium such as Si or Sn, an alloy or oxide containing such metals, or the like. The second negative electrode active material is preferably a silicon-based material. Examples of the silicon-based material include Si, alloys containing Si, and silicon oxides represented by SiOₓ (where x is 0.8 to 1.6). Since the second negative electrode active material can occlude more lithium ions than can the first negative electrode active material, battery capacity can be increased by using the second negative electrode active material as a negative electrode active material.

In the electrode assembly 14, assuming that the ratio of the mass of the second negative electrode active material to the total mass of the first negative electrode active material and the second negative electrode active material is defined as the second negative electrode active material ratio, the second negative electrode active material ratio at the outer winding end portion 42b is lower than the second negative electrode active material ratio at the inner winding end portion 42a. According to this feature, the coefficient of expansion of the negative electrode 12 at the outer winding end portion 42b can be made lower than the coefficient of expansion of the negative electrode 12 at the inner winding end portion 42a, and it is thereby possible to suppress occurrence of internal short circuit at the outer winding end portion 42b. The distribution of the second negative electrode active material ratio along the longitudinal direction of the negative electrode 12 is not particularly limited so long as the second negative electrode active material ratio at the outer winding end portion 42b is lower than the second negative electrode active material ratio at the inner winding end portion 42a. For example, the second negative electrode active material ratio may decrease at a constant rate from the outer winding end portion 42b side to the inner winding end portion 42a side. Alternatively, the rate of the decrease may change between the outer winding end portion 42b side and the inner winding end portion 42a side. As will be described later, in cases where the negative electrode mixture layer 42 is to be formed using a multi-layer die coater, for ease of manufacture, it is preferable to configure such that the second negative electrode active material ratio decreases at a constant rate from the outer winding end portion 42b side to the inner winding end portion 42a side.

The ratio of the mass of the second negative electrode active material to the total mass of the first negative electrode active material and the second negative electrode active material in the entire negative electrode mixture layer 42 is preferably 2 % by mass to 20 % by mass, and more preferably 5 % by mass to 15 % by mass. Within this range, it is possible to further improve reliability of the battery while achieving a high battery capacity.

Examples of the binder contained in the negative electrode mixture layer 42 include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). Further, the binder may contain fluororesins such as polytetrafluoroethylene (PTFE) and polyvinylidene fluoride (PVdF), polyacrylonitrile (PAN), polyimide resins, acrylic resins, polyolefin resins, and the like. A single type among these may be used alone, or two or more types may be used in combination.

Next, changes in the second negative electrode active material ratio in the winding direction (corresponding to the longitudinal direction in FIG. 4) of the negative electrode 12 will be described by reference to (a) to (d) in FIG. 5. In FIG. 5(a), the second negative electrode active material ratio at the inner winding end portion 42a is higher than the second negative electrode active material ratio at the outer winding end portion 42b, and the second negative electrode active material ratio decreases at a constant rate from the inner winding end portion 42a to the outer winding end portion 42b. By configuring such that the second negative electrode active material ratio at the outer winding end portion 42b is lower than the second negative electrode active material ratio at the inner winding end portion 42a, occurrence of internal short circuit at the outer winding end portion 42b can be suppressed, so that reliability of the secondary battery can be increased. The second negative electrode active material ratio at the outer winding end portion 42b is preferably 1 % by mass to 15 % by mass, and more preferably 5 % by mass to 10 % by mass.

Further, as shown in FIG. 5(b), it is possible that the slope indicating the rate of decrease of the second negative electrode active material ratio from the inner winding end portion 42a to the outer winding end portion 42b is not constant, and the slope may change in the midway. In FIG. 5(c), while the second negative electrode active material ratio decreases from the inner winding end portion 42a to the outer winding end portion 42b, the second negative electrode active material ratio is constant over a segment between the inner winding end portion 42a and the outer winding end portion 42b. In FIG. 5(d), while the second negative electrode active material ratio decreases from the inner winding end portion 42a to the outer winding end portion 42b, the second negative electrode active material ratio is constant near the outer winding end portion 42b. Similarly, so long as the second negative electrode active material ratio decreases from the inner winding end portion 42a to the outer winding end portion 42b, the second negative electrode active material ratio may be constant near the inner winding end portion 42a. As shown in (c) and (d) in FIG. 5, a region in which the second negative electrode active material ratio continuously decreases from the inner winding end portion 42a side toward the outer winding end portion 42b side is preferably provided in at least a part of the negative electrode mixture layer 42. In that region, the second negative electrode active material ratio preferably decreases linearly, but may alternatively decrease non-linearly. According to the above features, the second negative electrode active material ratio at the outer winding end portion 42b of the negative electrode mixture layer 42 can be made lower than the second negative electrode active material ratio at the inner winding end portion 42a.

Next, a description will be given regarding a method of forming the negative electrode mixture layer 42 in which the second negative electrode active material ratio changes from one of the inner winding end portion 42a side and the outer winding end portion 42b side to the other side. In order to form such a negative electrode mixture layer 42, a multi-layer die coater is preferably used. By using a multi-layer die coater, it is possible to simultaneously apply a plurality of negative electrode mixture slurries having different second negative electrode active material ratios to the negative electrode current collector 40 while adjusting their mixing ratios. When applying the negative electrode mixture slurries to the negative electrode current collector 40, the negative electrode current collector 40 is moved relative to the multi-layer die coater. Accordingly, by applying a plurality of negative electrode mixture slurries having different second negative electrode active material ratios to the negative electrode current collector 40 while changing their mixing ratio according to a predetermined timing, a region in which the second negative electrode active material ratio changes from the inner winding end portion 42a side toward the outer winding end portion 42b side can be formed at an arbitrary position in the negative electrode mixture layer 42. For example, a first negative electrode mixture slurry containing the first negative electrode active material and the second negative electrode active material is prepared, and a second negative electrode mixture slurry having a second negative electrode active material ratio that is lower than that of the first negative electrode mixture slurry is also prepared. Next, using a multi-layer die coater, the first and second negative electrode mixture slurries are applied to the negative electrode current collector 40 from the inner winding end portion 42a to the outer winding end portion 42b while increasing the mixing ratio of the second negative electrode mixture slurry to the first negative electrode mixture slurry. As a result, the negative electrode mixture layer 42 having the profile shown in FIG. 5(a) is obtained.

It is noted that when the negative electrode mixture layer 42 of the negative electrode 12 is divided into two or more sections by an exposed portion as in the positive electrode 11 shown in FIG. 4, it is sufficient so long as the second negative electrode active material ratio at the outer winding end portion 42b is lower than the second negative electrode active material ratio at the inner winding end portion 42a. A region in which the second negative electrode active material ratio decreases from the inner winding end portion 42a side toward the outer winding end portion 42b side is preferably formed in at least a part of the negative electrode mixture layer 42 that is continuous from the inner winding end portion 42a.

### EXAMPLES

While the present disclosure will be further described below using Examples, the present disclosure is not limited to these Examples.

### [Production of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVdF), and further adding thereto an appropriate amount of N-methyl-2-pyrrolidone (NMP). Next, this positive electrode mixture slurry was applied to both sides of a strip-shaped positive electrode current collector made of an aluminum foil having a thickness of 15 µm, and the applied slurry was dried and then rolled. The product was cut into a predetermined electrode plate size, and a positive electrode having positive electrode mixture layers formed on both sides of the positive electrode current collector was thereby produced. At a substantially central part in the longitudinal direction of the positive electrode, there was provided a positive electrode exposed portion where the mixture layer was absent and a surface of the current collector was exposed, and an aluminum positive electrode lead was welded to the positive electrode exposed portion.

### [Production of Negative Electrode]

A first negative electrode mixture slurry was prepared by mixing 89 parts by mass of graphite, 11 parts by mass of SiO, 1 part by mass of carboxymethyl cellulose (CMC), and 1 part by mass of styrene-butadiene rubber (SBR), and adding thereto an appropriate amount of water. Further, a second negative electrode mixture slurry was prepared by mixing 93 parts by mass of graphite, 7 parts by mass of SiO, 1 part by mass of CMC, and 1 part by mass of SBR, and adding thereto an appropriate amount of water. Next, the first negative electrode mixture slurry and the second negative electrode mixture slurry were set in a multi-layer die coater, and were applied similarly to both sides of a strip-shaped negative electrode current collector made of a copper foil having a thickness of 8 µm while continuously changing the mixing ratio of the first negative electrode mixture slurry and the second negative electrode mixture slurry from 1:0 to 0:1 from the inner winding end portion to the outer winding end portion, in a manner such that charge capacity per unit area became uniform in the longitudinal direction. Subsequently, the applied coating was dried. After the dried coating was rolled using a roller, the product was cut into a predetermined electrode plate size, and a positive electrode having negative electrode mixture layers formed on both sides of the negative electrode current collector was thereby produced. At the inner winding end portion, there was provided a negative electrode exposed portion where the mixture layer was absent and a surface of the current collector was exposed, and a nickel-copper negative electrode lead was welded to the negative electrode exposed portion.

### [Preparation of Non-Aqueous Electrolyte]

Into a mixed solvent composed of fluoroethylene carbonate (FEC) and dimethyl carbonate (DMC) (having a volume ratio of FEC:DMC = 1:3), LiPF₆ was dissolved at a concentration of 1.5 mol/L, and a non-aqueous electrolyte was thereby prepared.

### [Production of Secondary Battery]

An electrode assembly was produced by winding the above positive electrode and negative electrode with an interposed polyethylene separator. Insulation plates were arranged above and below the electrode assembly, respectively, and the electrode assembly was housed in a cylindrical outer casing. Next, the negative electrode lead was welded to the bottom portion of the outer casing, and the positive electrode lead was welded to a sealing assembly. Subsequently, after the electrolyte was injected into the interior of the outer casing by a reduced pressure technique, the upper end portion of the outer casing was sealed by being crimped to the sealing assembly via a gasket, and a secondary battery was thereby produced. The capacity of the produced secondary battery was 4600 mAh.

### <Example 2>

A secondary battery was produced in the same manner as in Example 1 except that, in the production of the negative electrode, the first negative electrode mixture slurry was caused to contain the graphite in 90 parts by mass and the Si oxide in 10 parts by mass, and the second negative electrode mixture slurry was caused to contain the graphite in 92 parts by mass and the Si oxide in 8 parts by mass.

### <Example 3>

A secondary battery was produced in the same manner as in Example 1 except that, in the production of the negative electrode, the first negative electrode mixture slurry was caused to contain the graphite in 88 parts by mass and the Si oxide in 12 parts by mass, and the second negative electrode mixture slurry was caused to contain the graphite in 92 parts by mass and the Si oxide in 8 parts by mass.

### <Comparative Example>

A secondary battery was produced in the same manner as in Example 1 except that, in the production of the negative electrode, a third negative electrode mixture slurry was prepared by mixing 91 parts by mass of graphite, 9 parts by mass of SiO, 1 part by mass of CMC, and 1 part by mass of SBR and adding thereto an appropriate amount of water, and only the third negative electrode mixture slurry was applied to both sides of the negative electrode current collector.

### [Evaluation of Bending of Negative Electrode at Outer Winding End Portion]

In a temperature environment of 45 °C, each of the batteries of the Examples and the Comparative Example was charged at a constant current of 0.3 C until the battery voltage reached 4.2 V, and was then charged at a constant voltage of 4.2V until the current value reached 0.02 C. Subsequently, discharging was performed at a constant current of 0.5 C until the battery voltage reached 2.5 V. This process was regarded as one cycle. After repeating this charging-discharging cycle for 1000 cycles, the battery was further charged. Using an X-ray CT (computed tomography) apparatus, cross-sectional observation of a part near the inner winding end portion of the electrode assembly in the charged battery was carried out, and a degree of bending of the negative electrode was ascertained.

Table 1 shows evaluation results of the Examples and the Comparative Example. Table 1 also shows the ratio of SiO (the second negative electrode active material ratio) in the negative electrode active materials contained in each of the first and second negative electrode mixture slurries.

**[Table 1]**

| | Ratio of SiO (parts by mass) | | Evaluation Result |
|---|---|---|---|
| | First Negative Electrode Mixture Slurry | Second Negative Electrode Mixture Slurry | Bending of Negative Electrode |
| Example 1 | 11 | 7 | No |
| Example 2 | 10 | 8 | No |
| Example 3 | 12 | 8 | No |
| Comparative Example | (The ratio of SiO was uniformly 9) | | Yes |

In Examples 1 to 3, even after 1000 cycles, elongation of the negative electrode at the outer winding end portion was suppressed, and bending did not occur. On the other hand, in the Comparative Example, it was observed that at the outer winding end portion, the negative electrode elongated and collided with the upper insulation plate, and that the negative electrode was bent. By thus suppressing bending of the negative electrode, it is possible to inhibit occurrence of internal short circuit and improve reliability of the battery.

### REFERENCE SIGNS LIST

10 secondary battery; 11 positive electrode; inner winding end portion; 12 negative electrode; 13 separator; 14 electrode assembly; 15 outer casing; 16 sealing assembly; 17, 18 insulation plate; 19 positive electrode lead; 20 negative electrode lead; 21 grooved portion; 22 filter; 23 lower valve member; 24 insulation member; 25 upper valve member; 26 cap; 26a opening; 27 gasket; 30 positive electrode current collector; 32 positive electrode mixture layer; 34 positive electrode exposed portion; 40 negative electrode current collector; 42 negative electrode mixture layer; 42a inner winding end portion; 42b outer winding end portion; 44 negative electrode exposed portion.

## Claims

1. A non-aqueous electrolyte secondary battery, comprising: an electrode assembly obtained by winding a positive electrode and a negative electrode with an interposed separator; a non-aqueous electrolyte; and an outer casing that houses the electrode assembly and the non-aqueous electrolyte, wherein
the negative electrode contains a first negative electrode active material and a second negative electrode active material having a coefficient of expansion during charging that is higher than that of the first negative electrode active material, and
assuming that a ratio of a mass of the second negative electrode active material relative to a total mass of the first negative electrode active material and the second negative electrode active material is defined as a second negative electrode active material ratio, a second negative electrode active material ratio at an outer winding end portion is lower than a second negative electrode active material ratio at an inner winding end portion.

2. The non-aqueous electrolyte secondary battery according to claim 1, wherein the first negative electrode active material is a carbon-based material, and the second negative electrode active material is a silicon-based material.
